# EUROPÄISCHE PATENTANMELDUNG

(11) **EP 3 176 230 A1**
(43) Veröffentlichungstag der Anmeldung: **07.06.2017**
(21) Anmeldenummer: 15197792.3
(22) Anmeldetag: 03.12.2015
(51) Int. Cl.: C09D 5/00

(54) **BRANDSCHUTZ-ZUSAMMENSETZUNG UND DEREN VERWENDUNG**

(71) Anmelder: HILTI Aktiengesellschaft, 9494 Schaan (LI)
(72) Erfinder: Lang, Martin, 82152 Planegg (DE); Simon, Sebastian, 86807 Buchloe Lindenberg (DE); Marauska, Juliane, 72766 Reutlingen (DE)
(74) Vertreter: Hilti Aktiengesellschaft Corporate Intellectual Property

(57) **Zusammenfassung**

Es wird eine Brandschutz-Zusammensetzung beschrieben, die ein Bindemittel die ein Bindemittel auf Basis einer Mischung aus einem Epoxid-Harz und einer ungesättigten Verbindung enthält. Durch die erfindungsgemäße Zusammensetzung können in einfacher und schneller Weise Beschichtungen mit der für die jeweilige Feuerwiderstandsdauer erforderlichen Schichtdicke aufgetragen werden, wobei die Schichtdicke auf ein Minimum reduziert und dennoch eine gute Brandschutzwirkung erreicht werden kann. Die erfindungsgemäße Zusammensetzung eignet sich besonders für den Brandschutz, insbesondere als Beschichtung von Kabel und Kabeltrassen zur Erhöhung der Feuerwiderstandsdauer.

## Beschreibung

Die vorliegende Erfindung betrifft eine Zusammensetzung, insbesondere eine ablativ wirkende Zusammensetzung, die ein Bindemittel auf Basis einer Mischung aus einem Epoxid-Harz und einer ungesättigten Verbindung mit Thiol-Verbindungen als Härtungsmittel enthält, sowie deren Verwendung für den Brandschutz insbesondere für die Beschichtung von Bauteilen, wie Stützen, Trägern, Fachwerkstäben, Dämmsystemen, z.B. Weichschotts, Kabel, Kabelbündeln oder Kabeltrassen zur Erhöhung der Feuerwiderstandsdauer.

Bei Bränden bilden Kabeltrassen aus mehreren Gründen besondere Gefahrenstellen. Zum einen tritt bei Bränden von mit Kunststoff isolierten Kabeln eine intensive Rauchentwicklung unter Emission schädlicher, z.T. giftiger Stoffe auf. Zum anderen kann sich entlang von Kabeltrassen ein Brand schnell ausbreiten und der Brand unter Umständen an eine vom ursprünglichen Brandherd weit entfernte Stelle gleitet werden. Bei Kabelanlagen besteht ferner das Problem, dass bei diesen Kabeln durch thermische Einwirkung oder Abbrand die Wirkung der Isolation nachlässt und durch Kurzschluss eine Unterbrechung des Stromflusses auftreten kann und damit die Kabel zerstört, bzw. funktionsuntüchtig werden.

Elektrische Kabel und Leitungen werden häufig in Fluren verlegt und von dort in die angrenzenden Räume unterteilt. Diese Flure dienen im Brandfall als Flucht- und Rettungswege, die bei Bränden von Kabelinstallationen durch Rauchentwicklung und toxische Brandgase unbenutzbar werden, wobei z. B. brennendes PVC stark korrosive Gase freisetzt. Kabelmassierungen stellen somit insbesondere im Industriebau, in Kraftwerksanlagen, in Krankenhäusern, Groß- und Verwaltungsbauten und generell in Gebäuden- mit hoher Installationsdichte ein erhebliches Gefahrenpotential dar. Die Kabelisolierungen sind in diesen Gebäuden oft die maßgebliche Brandlast und verursachen lang andauernde Brände mit Brandraumtemperaturen in ungünstigsten Fällen bis über 1000°C. Aus den genannten Gründen ist Kabeltrassen in Bezug auf Brandschutzmaßnahmen besondere Beachtung zu schenken.

Um diese Gefährdungen der fehlenden Funktionsfähigkeit der Kabel und der starken Brandlasterhöhung durch die Kabel zumindest zeitlich begrenzt zu verhindern, ist es bekannt, die Kabel durch unbrennbare Baustoffe der Baustoffklasse A1 oder A2 räumlich zu trennen, in dem die Kabel z.B. in Installations- und/oder Funktionserhaltkanälen verlegt werden. Dieses erfordert jedoch einen hohen Arbeitsaufwand. Zusätzlich entsteht ein hoher Raumbedarf durch aufwändige Konstruktionen, die zusätzlich zum Gewicht der Kabeltrasse noch das Gewicht der Installations- und/oder Funktionserhaltkanäle berücksichtigen müssen. Dazu werden häufig Kabel und Kabeltrassen mit isolierenden Materialien umwickelt, wie Aluminiumoxid-Silika-Matten oder Mineralwollmatten. Um einen ausreichenden Brandschutz zu erreichen, muss das Material sehr dick sein. Dies führt jedoch zu Problemen hinsichtlich der Abstände zwischen dem geschützten Gegenstand und benachbarten oder überlagerten Gegenständen. Darüber hinaus verursachen diese Materialien aufgrund ihrer thermischen Isoliereigenschaften Probleme bei Normalbetrieb. Eines dieser Probleme wird als "Herabsetzung der Strombelastbarkeit" bezeichnet. Dies bedeutet, dass die durch elektrische Kabel in dem Kabelrohr oder der Kabeltrasse erzeugte Wärme im Bereich der Isolierung nicht mehr abgeführt werden kann, was dazu führt, dass der in diesen Kabeln zulässige sichere Strombetriebspegel verringert wird oder dass eine Überhitzung der Kabel erfolgt. Diese Nachteile machen diese Art des Brandschutzes sehr unflexibel hinsichtlich deren Einsatzbereichs.

Zur Vermeidung dieser Nachteile ist es auch bekannt, für den Schutz elektrischer Kabel Beschichtungen aufzubringen, die im Brandfall unter thermischer Einwirkung intumeszieren, d.h. aufschäumen und so eine Dämmschicht bilden oder die durch physikalische und chemische Prozesse Wärme aufnehmen und so kühlend wirken. Derzeit auf dem Markt befindliche Beschichtungssysteme sind meist einkomponentige Beschichtungszusammensetzungen auf der Basis von Polymerdispersionen, die entweder sich endotherm zersetzende Verbindungen oder intumeszierende (dämmschichtbildende) Füllstoffe enthalten. Nachteilig an diesen Beschichtungen sind zum einen die relativ lange Trocknungsdauer der Beschichtung und zum anderen die limitierte maximale in einem Arbeitsschritt aufzutragende Schichtdicke. Grund dafür ist, dass diese Systeme physikalisch, d.h. durch Verdunstung des Lösungsmittels, trocknen. Daher sind für dickere Beschichtungen mehrere nacheinander folgende Auftragungen erforderlich, was diese Systeme zeit- und arbeitsintensiv und daher unwirtschaftlich macht.

Eine Alternative sind auf Kabeltrassen aufzubringende Materialen mit anorganischem Bindemittel, wie sie etwa in DE 196 49 749 A1 beschrieben sind. Hierin wird ein Verfahren zur Ausbildung eines Brandschutzes für brennbare oder hitzegefährdete Bauteile beschrieben, wobei die Bauteile mit einer Beschichtung versehen werden, die als Bindemittel ein anorganisches Material aus feingemahlenen hydraulischen Bindemitteln wie Calcium-Silicat, -Aluminat oder -Ferrit enthält, dem Ablativstoffe wie Aluminium- oder Magnesiumhydroxid zugesetzt ist. Diese Materialien zeigen einen Ablationseffekt, d.h. unter Hitzeeinwirkung wirken sie kühlend und keramisierend, Nachteil an dieser Maßnahme ist, dass einerseits das Aufbringen des den Ablationseffekt zeigenden Materials zeitintensiv ist und andererseits die Haftung des Materials an den Kabeln und den Kabelhalterungen ein Problem darstellt.

Es ist auch bekannt, flammwidrig bzw. schwer entflammbar ausgerüstete halogenfreie Kabel zu verwenden, die nur schwer entflammbar und raucharm sind und sich durch eine geringe Brandweiterleitung auszeichnen. Diese Kabel sind jedoch sehr teuer und kommen daher nur unter speziellen Bedingungen zum Einsatz.

Dieser Erfindung liegt die Aufgabe zugrunde, ein ablativ wirkendes Beschichtungssystem der eingangs erwähnten Art zu schaffen, das die genannten Nachteile vermeidet, das insbesondere nicht lösemittel- oder wasserbasiert ist und dessen Auftragung deshalb zum einen eine schnelle Aushärtung aufweist und zum anderen nicht auf dünne Schichten limitiert ist, welches aufgrund entsprechend abgestimmter Viskosität einfach aufzutragen ist und aufgrund des erreichbaren hohen Füllgrades nur eine geringe Schichtdicke erfordert.

Diese Aufgabe wird durch die Zusammensetzung nach Anspruch 1 gelöst. Bevorzugte Ausführungsformen sind den Unteransprüchen zu entnehmen.

Gegenstand der Erfindung ist demnach eine Brandschutz-Zusammensetzung mit mindestens einer Verbindung (a), die mindestens zwei Epoxidguppen als funktionelle Gruppen (FG-a) aufweist, mit mindestens einer Verbindung (b), die mindestens zwei Gruppen mit elektronenarmen Kohlenstoffmehrfachbindungen pro Molekül als funktionelle Gruppen (FG-b) aufweist, mit mindestens einer Verbindung (c), die mindestens zwei Thiol-Gruppen (-SH) als funktionelle Gruppen (FG-c) aufweist, und mit mindestens einem ablativ wirkendes Brandschutzadditiv (d) enthält.

Damit setzt sich das Bindemittel aus zwei Bestandteilen zusammen, zum einen aus einer Verbindung (a), die mindestens zwei Epoxidgruppen als funktionelle Gruppen (FG-a) aufweist, und einer Verbindung (b), die mindestens zwei Gruppen mit einer elektronenarmen Kohlenstoffmehrfachbindung pro Molekül als funktionelle Gruppen (FG-b) aufweist. Als Härtungsmittel wird eine Verbindung (c) mit funktionellen Gruppen (FG-c), die sowohl mit der funktionellen Gruppe (FG-a) als auch mit der funktionellen Gruppe (FG-b) reagieren können, verwendet. Hierbei handelt es sich um eine Verbindung (c) mit mindestens zwei Thiol-Gruppen als funktionelle Gruppen (FG-c). Die funktionellen Gruppen (FG-a) reagieren dabei in einer klassischen Epoxid-Thiol-Reaktion mit der Thiol-Gruppe und die funktionellen Gruppen (FG-b) reagieren in einer Thia-Michael-Reaktion mit der Thiol-Gruppe.

Die Zusammensetzung kann ferner einen Katalysator für die Reaktion zwischen der Verbindung (a) und der Verbindung (c) enthalten und/oder einen Katalysator für die Reaktion zwischen der Verbindung (b) und der Verbindung (c), wodurch die Zusammensetzung bei niedrigen Temperaturen, etwa Raumtemperatur, hinreichend schnell verarbeitbar und aushärtbar wird.

Durch die erfindungsgemäße Zusammensetzung können in einfacher und schneller Weise Beschichtungen mit der für die jeweilige Feuerwiderstandsdauer erforderlichen Schichtdicke aufgetragen werden. Die durch die Erfindung erreichten Vorteile sind im Wesentlichen darin zu sehen, dass im Vergleich zu den Systemen auf Lösemittel- oder Wasserbasis mit ihren inhärenten langsamen Aushärtezeiten die Arbeitszeit erheblich reduziert werden kann.

Ein weiterer Vorteil liegt darin, dass die erfindungsgemäße Zusammensetzung einen hohen Füllgrad mit den Brandschutzadditiven aufweisen kann, so dass selbst mit dünnen Schichten eine große isolierende Wirkung erreicht wird. Der mögliche hohe Füllgrad der Zusammensetzung kann selbst ohne die Verwendung von leicht flüchtigen Lösungsmitteln erreicht werden. Dementsprechend sinkt der Materialaufwand, was sich insbesondere beim großflächigen Auftragen günstig auf die Materialkosten auswirkt. Erreicht wird dies insbesondere durch die Nutzung eines reaktiven Systems, das nicht physikalisch trocknet, sondern chemisch über eine Additionsreaktion härtet. Damit erleiden die Zusammensetzungen keinen Volumenverlust durch das Abtrocknen von Lösemitteln oder bei wasserbasierten Systemen von Wasser. So ist bei einem klassischen System ein Lösemittelgehalt von etwa 25 % typisch. Dies bedeutet, dass aus einer 10 mm-Nassfilmschicht nur 7,5 mm als eigentliche Schutzschicht auf dem zu schützenden Substrat verbleiben. Bei der erfindungsgemäßen Zusammensetzung verbleiben mehr als 95 % der Beschichtung auf dem zu schützenden Substrat.

Im Brandfall erweicht das Bindemittel und die darin erhaltenen Brandschutzadditive zersetzen sich abhängig von den verwendeten Additiven in einer endothermen physikalischen oder chemischen Reaktion unter Bildung von Wasser und inerten Gasen, was zum einen zur Kühlung der Kabel führt und zum anderen die Ausbreitung des Feuers durch den Abbrand der Beschichtung verhindert.

Die erfindungsgemäßen Zusammensetzungen zeigen eine ausgezeichnete Haftung an unterschiedlichen Untergründen verglichen mit lösemittel- oder wasserbasierten Systemen, wenn diese ohne Grundierung aufgetragen werden, so dass sie universell eingesetzt werden können und nicht nur an den zu schützenden Leitungen sondern auch anderen Trägermaterialien haften.

Zum besseren Verständnis der Erfindung werden die folgenden Erläuterungen der hierin verwendeten Terminologie als sinnvoll erachtet. Im Sinne der Erfindung:
- bedeutet *"multifunktionell",* dass die entsprechende Verbindung mehr als eine funktionelle Gruppe pro Molekül aufweist; dementsprechend bedeutet multifunktionell im Zusammenhang mit Epoxidverbindungen, dass diese mehr als eine Epoxidgruppen pro Molekül aufweisen, und in Bezug auf Thiol-Verbindungen, dass diese wenigstens zwei Thiol-Gruppen pro Molekül aufweisen; die Gesamtzahl der jeweiligen funktionellen Gruppen ist die Funktionalität der entsprechenden Verbindung;
- bedeutet *"elektronenarm",* dass die Kohlenstoffmehrfachbindung in unmittelbarer Nähe, d.h. in der Regel an dem der Mehrfachbindung benachbarten Kohlenstoffatom, elektronenziehende Gruppen trägt, die Elektronendichte von der Mehrfachbindung abziehen, wie beispielsweise C=O;
- bedeutet *"ablativ wirkend",* dass bei Einwirken erhöhter Temperaturen, d.h. oberhalb von 200°C, wie sie etwa im Brandfall auftreten können, eine Reihe von chemischen und physikalischen Reaktionen erfolgen, die Energie in Form von Wärme benötigen, wobei diese Energie der Umgebung entzogen wird; dieser Begriff wird gleichbedeutend mit dem Begriff *"endotherm zersetzend"* verwendet;
- bedeutet *"(Meth)acryl*.../...*(meth)acryl..."* dass sowohl die "Methacryl.../...methacryl..."- als auch die "Acryl.../...acryl..."-Verbindungen umfasst sein sollen;
- ist ein *"Oligomer"* ein Molekül mit 2 bis 5 Wiederholungseinheiten und ist ein *"Polymer"* ein Molekül mit 6 oder mehr Wiederholungseinheiten und können Strukturen aufweisen, die linear, verzweigt, sternförmig, gewunden, hyperverzweigt oder vernetzt sind; Polymere können eine einzelne Art von Wiederholungseinheit aufweisen ("Homopolymere") oder sie können mehr als eine Art von Wiederholungseinheiten aufweisen ("Copolymere"). Wie hierin verwendet, ist "Harz" ein Synonym für Polymer;
- bedeutet *"Epoxidäquivalentmasse"* diejenige Menge an Epoxidharz in [g], die ein Äquivalent [Val] Epoxidfunktionen besitzt und berechnet sich aus der Molmasse *M* in [g/Mol] dividiert durch die Funktionalität *f* in [Val/Mol]; (EEW [g/Val]).

Im Allgemeinen wird angenommen, dass das Umsetzen eines Epoxidharzes mit einer Funktionalität von zwei sowie der ungesättigten Verbindung mit einer Thiol-Verbindung der Funktionalität von zwei zu linearen molekularen Strukturen führen wird. Oftmals müssen molekulare Strukturen erzeugt werden, die verzweigt und/oder vernetzt sind, wofür wahrscheinlich die Verwendung von mindestens einem Inhaltsstoff mit einer Funktionalität von größer zwei erforderlich ist. Daher ist das Epoxidharz und/oder die Thiol-Verbindung bevorzugt multifunktionell, wobei das multifunktionelle Epoxidharz oder die multifunktionelle Thiol-Verbindung oder beide stärker bevorzugt eine Funktionalität von größer zwei (> 2) haben.

Als Verbindung (a), die als funktionelle Gruppe (FG-a) mindestens zwei Epoxidgruppen enthält (hierin auch als Epoxidharz bezeichnet), sind in der Epoxychemie übliche Epoxidharze geeignet. Diese werden auf bekannte Art und Weise erhalten, zum Beispiel aus der Oxidation der entsprechenden Olefine oder aus der Reaktion von Epichlorhydrin mit den entsprechenden Polyolen, Polyphenolen oder Aminen. Grundlegende Informationen zu und Beispiele für Epoxidharze sind dem Kapitel "Epoxy Resins" der Encyclopedia of Polymer Sciences and Technology, Vol. 9, Wiley-Interscience, 2004, zu entnehmen. Als geeignete Epoxidharze seien beispielhaft erwähnt Reaktionsprodukte von Polyhydroxyverbindungen, insbesondere mehrwertige Phenole oder Phenol-Aldehyd-Kondensate, mit Epihalogenhydrinen oder deren Vorläufern, insbesondere:
a) Reaktionsprodukte von Epichlorhydrin mit Bisphenol A;
b) Reaktionsprodukte von Epichlorhydrin mit Bisphenol S
c) Epoxy-Novolake auf Phenol- oder Cresolbasis;
d) Aromatische Glycidylaminharze;
e) Epoxidharze ohne aromatische Struktureinheiten;
sowie Gemische zweier oder mehrerer derartiger Epoxidharze in beliebigem Verhältnis und in beliebigen Reinheitsgraden.

Als Epoxidharz besonders geeignet sind sogenannte Polyepoxid-Flüssigharze, im Folgenden als "Flüssigharz" bezeichnet. Diese weisen eine Glasübergangstemperatur auf, welche üblicherweise unterhalb von 25°C liegt, im Unterschied zu den sogenannten Festharzen, welche eine Glasübergangstemperatur oberhalb von 25°C aufweisen und sich zu bei 25°C schüttfähigen Pulvern zerkleinern lassen. Geeignete Verbindungen sind die Glycidylisierungsprodukte von:
- Dihydroxybenzol-Derivaten, wie Resorcin, Hydrochinon und Brenzkatechin;
- weiteren Bisphenolen oder Polyphenolen, wie Bis-(4-hydroxy-3-methylphenyl)-methan, 2,2-Bis-(4-hydroxy-3-methylyphenyl)-propan (Bisphenol-C), Bis-(3,5-dimethyl-4-hydroxyphenyl)-methan, 2,2-Bis-(3,5-dimethyl-4-hydroxyphenyl)-propan, 2,2-Bis-(3,5-dibromo-4-hydroxyphenyl)-propan, 2,2-Bis-(4-hydroxy-3-tert.-butylphenyl)-propan, 2,2-Bis-(4-hydroxyphenyl)-butan (Bisphenol-B), 3,3-Bis-(4-hydroxyphenyl)-pentan, 3,4-Bis-(4-hydroxyphenyl)-hexan, 4,4-Bis-(4-hydroxyphenyl)-heptan, 2,4-Bis-(4-hydroxyphenyl)-2-methylbutan, 2,4-Bis-(3,5-dimethyl-4-hydroxyphenyl)-2-methylbutan, 1,1-Bis-(4-hydroxyphenyl)-cyclohexan (Bisphenol-Z), 1,1-Bis-(4-hydroxyphenyl)-3,3,5-trimethylcyclohexan (Bisphenol-TMC), 1,1-Bis-(4-hydroxyphenyl)-1-phenyl-ethan, 1,4-Bis[2-(4-hydroxyphenyl)-2-propyl]-benzol) (Bisphenol-P), 1,3-Bis-[2-(4-hydroxyphenyl)-2-propyl]-benzol) (Bisphenol-M), 4,4'-Dihydroxydiphenyl (DOD), 4,4'-Dihydroxybenzophenon, Bis-(2-hydroxynaphth-1-yl)-methan, Bis-(4-hydroxynaphth-1-yl)-methan 1,5-Dihydroxy-naphthalin, Tris-(4-hydroxyphenyl)-methan, 1,1,2,2-Tetrakis-(4-hydroxyphenyl)-ethan Bis-(4-hydroxyphenyl)-ether, Bis-(4-hydroxyphenyl)sulfon;
- Kondensationsprodukten von Phenolen mit Formaldehyd, die unter sauren Bedingungen erhalten werden, wie Phenol-Novolaken oder Kresol-Novolaken, auch Bisphenol-F-Novolake genannt;
- aromatischen Aminen, wie Anilin, Toluidin, 4-Aminophenol, 4,4'-Methylendiphenyldiamin (MDA), 4,4'-Methylendiphenyldi-(N-methyl)-amin, 4,4'-[1,4-Phenylen-bis-(1-methyl-ethyliden)]-bisanilin (Bisanilin-P), 4,4'-[1,3-Phenylen-bis-(1-methyl-ethyliden)]-bisanilin (Bisanilin-M);
- sowie Gemische zweier oder mehrerer derartiger Epoxidharze in beliebigem Verhältnis und in beliebigen Reinheitsgraden.

Weiter bevorzugt im Sinne der Erfindung sind Reaktionsprodukte von Epichlorhydrin mit Bisphenol A mit einem Epoxidäquivalentmasse (EEW) ≤ 550 g/Val; Reaktionsprodukte von Epichlorhydrin mit Bisphenol F, dem einfachsten Vertreter der Novolake, mit einem EEW ≤ 500 g/Val; beliebige Gemische dieser beiden Reaktionsprodukte, Reaktionsprodukte eines beliebigen Gemisches von Bisphenol A und Bisphenol F mit Epichlorhydrin, Epoxidharze wie Hydantoin-basierte Epoxidharze oder Diglycidylether von hydriertem Bisphenol A oder Bisphenol F; sowie Gemische zweier oder mehrerer derartiger Epoxidharze in beliebigem Verhältnis und in beliebigen Reinheitsgraden. Besonders bevorzugt sind Reaktionsprodukte von Epichlorhydrin mit Bisphenol A mit einem EEW ≤ 330 g/Val; Reaktionsprodukte von Epichlorhydrin mit Bisphenol F, dem einfachsten Vertreter der Novolake, mit einem EEW ≤ 300 g/Val, beliebige Gemische dieser beiden Reaktionsprodukte, Reaktionsprodukte eines beliebigen Gemisches von Bisphenol A und Bisphenol F mit Epichlorhydrin mit einem EEW ≤ 330 g/Val, 5,5-Dimethyl-1,3-bis(2,3-epoxypropyl)-2,4-imidazolidindion; 2,2-Bis[4-(2,3-epoxypropoxy)-cyclohexyl]propan; sowie Gemische zweier oder mehrerer derartiger Epoxidharze in beliebigem Verhältnis und in beliebigen Reinheitsgraden.

Ganz besonders bevorzugt sind Reaktionsprodukte von Epichlorhydrin mit Bisphenol A mit einem EEW ≤ 200 g/Val, wie beispielsweise Epilox® A 17-01, Epilox® A 18-00, Epilox® A 19-00, Epilox® A 19-02, Epilox® A 19-03 oder Epilox® A 19-04 der Leuna-Harze GmbH, dargestellt durch die nachfolgende Formel, worin 0 ≤ n ≤ 0,2;

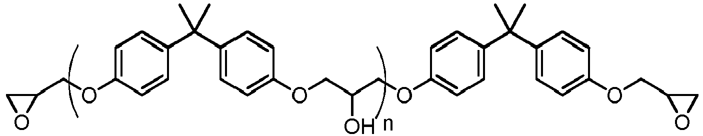

Reaktionsprodukte von Epichlorhydrin mit Bisphenol F, dem einfachsten Vertreter der Novolake, mit einem EEW ≤ 185 g/Val, wie beispielsweise Epilox® F 16-01 oder Epilox® F 17-00 der Leuna-Harze GmbH, dargestellt durch die nachfolgende Formel, worin 0 ≤ n ≤ 0,2; 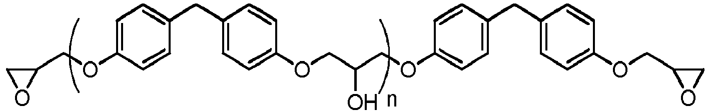 sowie Gemische zweier oder mehrerer derartiger Epoxidharze in beliebigem Verhältnis und in beliebigen Reinheitsgraden, wie beispielsweise Epilox® AF 18-30, Epilox® 18-50 oder Epilox® T 19-27 der Leuna-Harze GmbH, sowie Reaktionsprodukte eines beliebigen Gemisches von Bisphenol A und Bisphenol F mit Epichlorhydrin mit einem EEW ≤ 200 g/Val.

Als Epoxidharz (a-1) eignet sich auch ein aliphatisches oder cycloaliphatisches Polyepoxid, wie beispielsweise:
- ein Glycidylether eines gesättigten oder ungesättigten, verzweigten oder unverzweigten, zyklischen oder offenkettigen C₂- bis C₃₀-Diols, wie beispielsweise Ethylenglykol, Propylenglykol, Butylenglykol, Hexandiol, Octandiol, ein Polypropylenglykol, Dimethylolcyclohexan, Neopentylglykol oder Dibromoneopentylglykol;
- ein Glycidylether eines tri- oder tetrafunktionellen, gesättigten oder ungesättigten, verzweigten oder unverzweigten, zyklischen oder offenkettigen Polyols wie Rizinusöl, Trimethylolpropan, Trimethylolethan, Pentaerythritol, Sorbit oder Glycerin, sowie alkoxyliertes Glycerin oder alkoxyliertes Trimethylolpropan;
- ein hydriertes Bisphenol-A-, -F- oder -A/F-Flüssigharz, beziehungsweise die Glycidylisierungsprodukte von hydriertem Bisphenol-A, -F oder -A/F;
- ein N-Glycidylderivat von Amiden oder heterocyclischen Stickstoffbasen, wie Triglycidylcyanurat und Triglycidylisocyanurat, sowie Umsetzungsprodukte von Epichlorhydrin und Hydantoin.

Als Epoxidharz möglich sind auch ein Bisphenol A-, F- oder A/F-Festharz, welches ähnlich aufgebaut ist wie die bereits genannten Flüssigharze der obigen beiden Formeln, aber anstelle des Index n einen Wert von 2 bis 12 aufweist, und eine Glasübergangstemperatur oberhalb von 25°C aufweist.

Als Epoxidharz eignen sich schließlich auch Epoxidharze aus der Oxidation von Olefinen, beispielsweise aus der Oxidation von Vinylcylohexen, Dicyclopentadien, Cyclohexadien, Cyclododecadien, Cyclododecatrien, Isopren, 1,5-Hexadien, Butadien, Polybutadien oder Divinylbenzol.

Als Verbindung (a) kann jeweils eine Verbindung (a) oder ein Gemisch von zwei oder mehreren, unterschiedlichen Verbindungen (a) eingesetzt werden.

Zweckmäßig wird als Verbindung (b) eine Verbindung mit mindestens zwei elektronenarmen Kohlenstoffmehrfachbindungen, wie C-C-Doppelbindungen oder C-C-Dreifachbindungen, bevorzugt C-C-Doppelbindungen, pro Molekül als funktionelle Gruppe (FG-b) verwendet. Hierdurch wird eine schnelle Aushärtung erreicht und die Tieftemperaturhärtung wird verbessert, verglichen mit einem System, welches die Verbindung (b) nicht enthält.

Gemäß einer Ausführungsform der Erfindung weist die Verbindung (b) mindestens zwei funktionelle Gruppen (FG-b) mit der nachfolgenden Struktur (I) oder (II) auf: 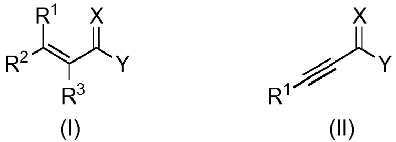 in denen R¹, R² und R³ jeweils unabhängig voneinander Wasserstoff oder organische Reste darstellen, wie zum Beispiel eine lineare, verzweigte oder cyclische, gegebenenfalls substituierte Alkylgruppe, Arylgruppe, Aralkylgruppe (auch arylsubstituierte Alkylgruppe genannt) oder Alkarylgruppe (auch alkyl-substituierte Arylgruppe genannt), einschließlich Derivate und substituierte Versionen davon, wobei diese unabhängig voneinander zusätzliche Ethergruppen, Carboxylgruppen, Carbonylgruppen, Thiol-analoge Gruppen, Stickstoff-enthaltende Gruppen oder Kombinationen davon enthalten können; X Sauerstoff, Schwefel oder NR⁴ darstellt, worin R⁴ Wasserstoff oder jede der organischen Gruppen, wie sie oben für R¹, R² und R³ beschrieben sind, darstellt; Y OR⁵, SR⁵ oder NR⁵R⁶ darstellt, worin R⁵ Wasserstoff oder jede der organischen Gruppen, wie sie oben für R¹, R² und R³ beschrieben sind, darstellt.

Bevorzugt ist die funktionelle Gruppe (FG-b) eine Gruppe der Struktur (III): 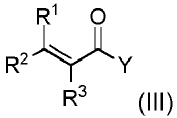 in der R¹, R² und R³ wie oben beschrieben sind und Y OR⁵ oder NR⁵R⁶ darstellt, wobei R⁵ und R⁶ wie oben beschrieben sind.

Einige geeignete multifunktionelle Verbindungen (b) in der vorliegenden Erfindung umfassen zum Beispiel Moleküle, in denen einige oder alle der funktionellen Gruppen (FG-b) der Strukturen (III) Reste von (Meth)acrylsäure, Fumarsäure oder Maleinsäure, substituierte Versionen oder Kombinationen davon sind, die über eine Esterbindung an die Verbindung (b) angebunden sind. Eine multifunktionelle Verbindung (b) mit funktionellen Gruppen (FG-b) der Strukturen (III), die zwei oder mehr Reste von (Meth)acrylsäure umfassen, wird hierin als "polyfunktionelles (Meth)acrylat" bezeichnet. Polyfunktionelle (Meth)acrylate mit mindestens zwei Doppelbindungen, die als der Akzeptor in der Michael-Addition agieren können, sind bevorzugt.

Beispiele geeigneter Di(meth)acrylate umfassen, sind aber nicht darauf beschränkt: Ethylenglykol-di(meth)acrylat, Propylenglykol-di(meth)acrylat, Diethylenglykol-di(meth)acrylat, Dipropylenglykol-di(meth)acrylat, Triethylenglykol-di(meth)acrylat, Tripropylenglykol-di(meth)acrylat, Tertraethylenglykol-di(meth)acrylat, Tetrapropylenglykol-di(meth)acrylat, Polyethylenglykol-di(meth)acrylat, Polypropylenglykol-di(meth)acrylat, einfach oder mehrfach ethoxyliertes Bisphenol A-Di(meth)acrylat, Bisphenol A diglycidylether-di(meth)acrylat, Resorcinoldiglycidylether-di(meth)acrylat, 1,3-Propandiol-di(meth)acrylat, 1,4-Butanediol-di(meth)acrylat, 1,5-Pentandiol-di(meth)acrylat, 1,6-Hexandiol-di(meth)acrylat, Neopentylglykol-di(meth)acrylat, Cyclohexanedimethanol-di(meth)acrylat, einfach oder mehrfach ethoxyliertes Neopentylglykol-di(meth)acrylat, einfach oder mehrfach propoxyliertes Neopentylglykol-di(meth)acrylat, einfach oder mehrfach ethoxyliertes Cyclohexandimethanol-di(meth)acrylat, propoxyliertes Cyclohexandimethanol-di(meth)acrylat, Arylurethan-di(meth)acrylate, aliphatisches Urethan-di(meth)acrylat, Polyester-di(meth)acrylat und Gemische davon.

Beispiele geeigneter Tri(meth)acrylate umfassen, sind aber nicht darauf beschränkt: Trimethylolpropan-tri(meth)acrylat, trifunktionelles (Meth)acrylsäure-s-triazin, Glycerol-tri(meth)acrylat, einfach oder mehrfach ethoxyliertes Trimethylolpropan-tri(meth)acrylat, einfach oder mehrfach propoxyliertes Trimethylolpropan-tri(meth)acrylat, Tris(2-hydroxyethyl)isocyanurat-tri(meth)acrylat, einfach oder mehrfach ethoxyliertes Glycerol-tri(meth)acrylat, einfach oder mehrfach propoxyliertes Glycerol-tri(meth)acrylat, Pentaerythritol-tri(meth)acrylat, Arylurethan-tri(meth)acrylate, aliphatische Urethan-tri(meth)acrylate, Melamin-tri(meth)acrylate, Epoxy-Novolac-tri(meth)acrylate, aliphatisches Epoxy-tri(meth)acrylat, Polyester-tri(meth)acrylat und Gemische davon. Beispiele geeigneter Tetra(meth)acrylate umfassen, sind aber nicht darauf beschränkt: Di(trimethylolpropan)-tetra(meth)acrylat, Pentaerythritol-tetra(meth)acrylat, einfach oder mehrfach ethoxyliertes Pentaerythritol-tetra(meth)acrylat, einfach oder mehrfach propoxyliertes Pentaerythritol-tetra(meth)acrylat, Dipentaerythritol-tetra(meth)acrylat, einfach oder mehrfach ethoxyliertes Dipentaerythritol-tetra(meth)acrylat, einfach oder mehrfach propoxyliertes Dipentaerythritol-tetra(meth)acrylat, Arylurethan-tetra(meth)acrylate, aliphatische Urethan-tetra(meth)acrylate, Melamin-tetra(meth)acrylate, Epoxy-Novolac-tetra(meth)acrylate, Polyester-tetra(meth)acrylate und Gemische davon.

Alternativ kann die funktionelle(n) Gruppe(n) (FG-b) an eine Polyolverbindung gebunden sein, die aus der Gruppe ausgewählt ist, bestehend aus Pentaerythritol, Neopentylglykol, Glycerol, Trimethylolpropan, Ethylenglykol und Polyethylenglykolen, Propylenglykolen und Polypropylenglykolen, Butandiol, Pentandiol, Hexandiol, Tricyclodecandimethylol, 2,2,4-Trimethyl-1,3-pentandiol, Bisphenol A, Cyclohexandimethanol, alkoxylierten und/oder propoxylierten Derivaten von Neopentylglykol und Tertraethylenglykol.

Als Verbindung (b) kann jeweils eine Verbindung (b) oder ein Gemisch von zwei oder mehreren, unterschiedlichen Verbindungen (b) eingesetzt werden.

Zweckmäßig kann als Härtungsmittel jede Thiol-funktionalisierte Verbindung (c) (hierin auch als Thiol-Verbindung bezeichnet), wobei die Thiol-Gruppe (-SH) die funktionelle Gruppe (FG-c) bildet, verwendet werden, die mit den Verbindungen (a) und den Verbindungen (b) reagieren kann.

Geeignete multifunktionelle Thiol-Verbindungen basieren auf Polyalkylenoxiden, Polyurethanen, Polyethylenvinylacetaten, Polyvinylalkoholen, Polydienen, hydrierten Polydienen, Alkyden, Alkydpolyestern, (Meth)acrylpolymeren, Polyolefinen, Polyestern, halogenierten Polyolefinen, halogenierten Polyestern, Copolymeren davon oder ein Gemischen davon.

In bevorzugten Ausführungsformen ist die Thiol-Gruppe an eine Polyhydroxyerbindung gebunden, d.h. einer oder mehr mehrwertige(r) Alkohol(e). Einige mehrwertige Alkohole, die als Gerüste geeignet sind, umfassen zum Beispiel Alkandiole, Alkylenglycole, wie Ethylenglycol, Propylenglycol, Glycerole, Zucker, Pentaerythritole, mehrwertige Derivate davon oder Gemische davon. Einige Beispiele für mehrwertige Alkohole, die als Gerüste geeignet sind, sind Neopentylglycol, Trimethylolpropan, Ethylenglycol und Polyethyleneglycol, Propylenglycol und Polypropylenglycol, Butandiol, Pentandiol, Hexandiol, Tricyclodecandimethylol, 2,2,4-Trimethyl-1,3-pentandiol, Bisphenol A, Cyclohexandimethanol, alkoxylierte und/oder propoxylierte Derivate von Neopentylglycol und Tertraethylenglycolcyclohexandimethanol, Hexandiol, Rizinusöl und Trimethylolpropan. Besonders bevorzugt sind Ester der α-Thioessisäure (α-Mercaptoacetet) und α-Thiopropionsäure (α-Mercaptopropionate) mit Monoalkoholen, Diolen, Triolen, Tetraolen, Pentaolen und anderen Polyolen. Die auf diese Weise funktionalisierte Alkoholgruppe kann Bestandteil eines Polymers sein. Auch Gemisch von Alkoholen können als Basis für die Thiol-Verbindung verwendet werden. Am stärksten bevorzugt ist die Thiol-Verbindung ein α-Thioessigsäureester oder α-Thiopropionsäureester oder ein Derivat oder Gemisch davon. In dieser Hinsicht wird Bezug genommen auf die Abschnitte [015] bis [017] der Anmeldung EP 1066335 A1, sowie die EP 1586596 A1 und WO 2007/042199 A1, deren Inhalte hiermit in diese Anmeldung aufgenommen werden.

Besonders bevorzugte Thiol-Verbindungen (c) sind Ester der α-Thioessigsäure (2-Mercaptoacetate), β-Thiopropionsäure (3-Mercaptopropionate) und 3-Thiobuttersäure (3-Mercaptobutyrate) mit Monoalkoholen, Diolen, Triolen, Tetraolen, Pentaolen oder anderen Polyolen sowie 2-Hydroxy-3-mercaptopropylderivate von Monoalkoholen, Diolen, Triolen, Tetraolen, Pentaolen oder anderen Polyolen. Auch Gemische von Alkoholen können hierbei als Basis für die Thiol-Verbindung verwendet werden. In dieser Hinsicht wird Bezug genommen auf die WO 99/51663 A1, deren Inhalt hiermit in diese Anmeldung aufgenommen wird.

Als besonders geeignete Thiol-Verbindungen können beispielhaft erwähnt werden: Glykol-bis(2-mercaptoacetat), Glykol-bis(3-mercaptopropionat), 1,2-Propylenglykol-bis(2-mercaptoacetat), 1,2-Propylenglykol-bis(3-mercaptopropionat), 1,3-Propylenglykol-bis(2-mercaptoacetat), 1,3-Propylenglykol-bis(3-mercaptopropionat), Tris(hydroxymethyl)methan-tris(2-mercaptoacetat), Tris(hydroxymethyl)methan-tris(3-mercaptopropionat), 1,1,1-Tris(hydroxymethyl)ethan-tris(2-mercaptoacetat), 1,1,1-Tris(hydroxymethyl)ethan-tris(3-mercaptopropionat), 1,1,1-Trimethylolpropan-tris(2-mercaptoacetat), ethoxyliertes 1,1,1 -Trimethylolpropan-tris(2-mercaptoacetat), propoxyliertes 1,1,1-Trimethylolpropan-tris(2-mercaptoacetat), 1,1,1-Trimethylolpropan-tris(3-mercaptopropionat), ethoxyliertes 1,1,1-Trimethylolpropan-tris(3-mercaptopropionat), propoxyliertes Trimethylolpropan-tris(3-mercaptopropionat), 1,1,1-Trimethylolpropan-tris(3-mercaptobutyrat), Pentaerythritol-tris(2-mercaptoacetat), Pentaerythritol-tetrakis(2-mercaptoacetat), Pentaerythritol-tris(3-mercaptopropionat), Pentaerythritol-tetrakis(3-mercaptopropionat), Pentaerythritol-tris(3-mercaptobutyrat), Pentaerythritol-tetrakis(3-mercaptobutyrat), Capcure 3-800 (BASF), GPM-800 (Gabriel Performance Products), Capcure LOF (BASF), GPM-800LO (Gabriel Performance Products), Polythiol QE 340 M, KarenzMT PE-1 (Showa Denko), 2-Ethylhexylthioglykolat, *iso*-Octylthioglykolat, Di(*n*-butyl)thiodiglykolat, Glykol-di-3-mercaptopropionat, 1,6-Hexandithiol, Ethylenglykol-bis(2-mercaptoacetat) und Tetra(ethylenglykol)dithiol.

Weiterhin können als Thiol-Verbindungen (c) Polysulfide verwendet werden. Diese können durch Polykondensation von Bis-(2-chlorethyl)-formal mit Alkalipolysulfid hergestellt werden. Trifunktionelle Polysulfide entstehen durch Zugabe von 1,2,3-Trichlorpropan während der Synthese. Das Netzwerk ist aus organischen Segmenten aufgebaut, die über Disulfidbrücken miteinander verknüpft sind. Im weiteren Verlauf der Herstellung wird das Netzwerk durch reduktive Spaltung einzelner Disulfidbindungen mittels Natriumdithionit gezielt zerstört. Dabei werden die Moleküle auf die gewünschte Kettenlänge eingestellt und gleichzeitig die von der Spaltung erfassten Disulfidbindungen in Thiol-Endgruppen umgewandelt. Beispiele dafür sind die Thioplast-Polymere von Akzo Nobel.

Die Thiol-Verbindung (c) kann alleine oder als Gemisch von zwei oder mehreren, unterschiedlichen Thiol-Verbindungen eingesetzt werden.

Je nach Funktionalität der jeweiligen Verbindung (a), (b) und/oder (c) können der Vernetzungsgrad des Bindemittels und somit sowohl die Festigkeit der entstehenden Beschichtung als auch deren elastische Eigenschaften eingestellt werden.

In der Zusammensetzung der vorliegenden Erfindung kann der relative Anteil an Epoxidharzen (a) zu Thiol-Verbindungen (c) durch das reaktive Äquivalentverhältnis, welches das Verhältnis der Anzahl aller Epoxidgruppen in der Zusammensetzung zu der Anzahl an Thiol-Gruppen in der Zusammensetzung ist, charakterisiert werden. Das reaktive Äquivalentverhältnis beträgt 0,1 bis 10:1, bevorzugt 0,2 bis 5:1, stärker bevorzugt 0,3 bis 3:1, noch stärker bevorzugt 0,5 bis 2:1 und noch stärker bevorzugt 0,75 bis 1,25:1. Als zusätzliche Härterkomponente, auch als Co-Härtungsmittel bezeichnet, kann optional ein für Epoxidharze üblicher Aminhärter, d.h. eine Verbindung (e), die mindestens eine, bevorzugt zwei oder mehrere Aminogruppen als funktionelle Gruppen (FG-e) aufweist, verwendet werden. Geeignete Beispiele können dem Kapitel "Epoxy Resins" der Encyclopedia of Polymer Sciences and Technology, Vol. 9, Wiley-Interscience, 2004, entnommen werden. Insbesondere haben sich aliphatische oder aromatische Amine, Amidoamine, Polyamide, Polyamin-Epoxidharzaddukte und/oder Ketimine bewährt. Die Aminhärter können einzeln oder als Gemisch zweier oder mehrerer Verbindungen eingesetzt werden. Beispiele sind Ethylendiamin, Propylendiamin, Hexamethylendiamin, Diethylentriamin (DETA), Tetraethylentetramin (TETA), Isophorondiamin (IPDA), m-Xylylendiamin (mXDA), *N*-Methylbenzylamin (NMB) oder die Ancamide^{®} (Air Products), Diethylaminopropylamin (DEAPA), *N*-Aminoethylpiperazin (N-AEP), Diaminodiphenylsulfon (DDS), 1,8-Diamino-*p*-menthan (MDA). Ebenso können Polyetheramine wie die Verbindungen aus der Jeffamine^{Ⓡ-}Reihe von Huntsman verwendet werden, z.B. D-230 (Huntsman), Jeffamine^{®} D-400 (Huntsman), Jeffamine^{®} T-403 (Huntsman).

Die Vernetzung des Bindemittels wird dabei durch eine Kombination aus (i) der Thia-Michael-Reaktion und (ii) der Härtung der Epoxidverbindung mit Thiol-verbindungen (Epoxymercapane bzw. Epoxythiole) und gegebenenfalls (iii) der Aza-Michael-Reaktion und (iv) der Standard Epoxy-Amin-Reaktion erreicht.

Über ein entsprechend gewähltes Gemisch aus Thiol-verbindung (c) und Aminen (e) als Härtungsmittel für das Epoxidharz (a) und die multifunktionelle Verbindung (b) können die Beschichtungseigenschaften eingestellt werden.

Bevorzugt wird ein Katalysator (K-1) für die Härtung, d.h. die Reaktion des Epoxidharzes (a) mit der Thiol-Verbindung (c) verwendet. Durch die Verwendung eines Katalysators werden Zusammensetzungen erhalten, die schnell, d.h. innerhalb von wenigen Minuten, und vollständig auch bei Raumtemperatur aushärten, was solche Zusammensetzungen sehr attraktiv für die Anwendung vor Ort, etwa auf der Baustelle macht.

Als Katalysatoren (K-1) können die üblicherweise für Reaktionen zwischen Epoxidharzen und Thiol-Verbindungen verwendeten Verbindungen, wie tertiäre Amine, z.B. Benzyldimethylamin, N,N-Dimethylpropylamin, 1,8-Diazabicyclo[5.4.0]undec-7-en und Bis-N,N-Dimethylethanolaminether, Phenol-Derivate, z.B. Nonylphenol, und dergleichen, die dem Fachmann bekannt sind, verwendet werden. In dieser Hinsicht wird Bezug genommen auf die WO 2012/082224 A1, deren Inhalt hiermit in diese Anmeldung aufgenommen wird.

In einer bevorzugten Ausführungsform der Erfindung ist der Katalysator (K-1) ein Aminophenol oder ein Ether davon, der mindestens eine tertiäre Aminogruppe gegebenenfalls zusammen mit einer primären und/oder sekundären Aminogruppe aufweist, insbesondere solche der allgemeinen Formel (XX), 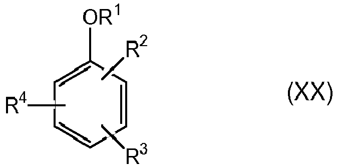 in der R¹ Wasserstoff oder ein linearer oder verzweigter C₁C₁₅-Alkylrest ist, R² (CH₂)ₙNR⁵R⁶- oder NH(CH₂)ₙNR⁵R⁶- ist, in denen R⁵ und R⁶ unabhängig voneinander ein linearer oder verzweigter C₁-C₁₅-Alkylrest sind und n = 0 oder 1 ist, R³ und R⁴ unabhängig voneinander Wasserstoff, (CH₂)ₙNR⁷R⁸ oder NH(CH₂)ₙNR⁷R⁸ sind, R⁷ und R⁸ unabhängig voneinander Wasserstoff oder ein linearer oder verzweigter C₁-C₁₅-Alkylrest sind und n = 0 oder 1 ist.

R¹ ist bevorzugt Wasserstoff oder ein C₁-C₁₅-Alkylrest, insbesondere ein linearer C₁-C₁₅-Alkylrest, stärker bevorzugt Methyl oder Ethyl und am stärksten bevorzugt Methyl.

Bevorzugt ist das Phenol der Formel (XX) in 2-, 4- und 6-Position substituiert, d.h. die Substituenten R², R³ und R⁴ sitzen in 2-, 4- und 6-Position.

Für den Fall, dass R⁵, R⁶, R⁷ und R⁸ Alkylreste sind, sind diese bevorzugt ein C₁-C₅-Alkylrest, stärker bevorzugt Methyl oder Ethyl und am stärksten bevorzugt Methyl.

Als Katalysator (K-1) kann entweder eine Verbindung oder ein Gemisch von mindestens zwei Verbindungen der Formel (XX) eingesetzt werden.

Besonders bevorzugt ist der Katalysator (K-1) unter 2,4,6-Tris(dimethylaminomethyl)phenol, Bis(dimethylaminomethyl)phenol, 2,4,6-Tris(dimethylamino)phenol und einem Gemisch davon ausgewählt.

Obwohl die Reaktion zwischen der multifunktionellen Verbindung (b) und der Thiol-Verbindung (c) bereits ohne Katalysator abläuft und eine Härtung stattfindet, kann ein Katalysator (K-2) für diese Reaktion verwendet werden. Dieser weitere Katalysator (K-2) kann zusätzlich zu dem Katalysator (K-1) für die Reaktion zwischen dem Epoxid-Harz (a) und der Thiol-Verbindung (c) verwendet werden.

Als Katalysatoren (K-2) können die üblicherweise für Michael-Additionsreaktionen, insbesondere zwischen elektronenarmen C-C-Mehrfachbindungen, besonders bevorzugt C-C-Doppelbindungen, und aktive Wasserstoffatome enthaltende Verbindungen, insbesondere Thiole, verwendeten Nukleophile verwendet werden, wie Trialkylphosphine, tertiäre Amine, einer Guanidinbase, einem Alkoholat, einem Tetraorganoammoniumhydroxid, einem anorganischen Carbonat oder Bicarbonat, einem Carbonsäuresalz oder einer Superbase, einem Nukleophil wie etwa einem primären oder einem sekundären Amin oder einem tertiären Phosphin (vgl. etwa C. E. Hoyle, A. B. Lowe, C. N. Bowman, Chem Soc. Rev. 2010, 39, 1355-1387), die dem Fachmann bekannt sind.

Geeignete Katalysatoren (K-2) sind beispielsweise Triethylamin, Ethyl-N,N-diisopropylamin, 1,4-Diazabicyclo[2.2.2]octan (DABCO), 1,8-Diazabicyclo[5.4.0]undec-7-en (DBU), 1,5-Diazabicyclo[4.3.0]non-5-en (DBN), Dimethylaminopyridin (DMAP), Tetramethylguanidin (TMG), 1,8-Bis(dimethylamino)naphthalin, 2,6-Di-*tert*-butylpyridin, 2,6-Lutidin, Natriummethanolat, Kaliummethanolat, Natriumethanolat, Kaliumethanolat, Kalium-*tert*-butylalkoholat, Benzyltrimethylammoniumhydroxid, Kaliumcarbonat, Kaliumbicarbonat, Natrium- oder Kaliumsalze von Carbonsäuren, deren konjugierte Säurestärken zwischen pKₐ 3 und 11 liegen, *n*-Hexylamin, Di-*n*-propylamin, Tri-*n-*octylphosphin, Dimethylphenylphosphin, Methyldiphenylphosphin und Triphenylphosphin.

In einer Ausführungsform der Erfindung wird als Katalysator (K-1) und (K-2) eine Verbindung verwendet, welche sowohl die Reaktion zwischen dem Epoxid-Harz (a) und der Thiol-Verbindung (c), und der multifunktionellen Verbindung (b) und der Thiol-Verbindung (c), zu katalysieren vermag.

Der jeweilige Katalysator kann in katalytischen Mengen oder äquimolar oder im Überschuss eingesetzt werden.

Durch Zugabe mindestens eines Reaktivverdünners kann die Viskosität der Zusammensetzung entsprechend den Applikationseigenschaften eingestellt bzw. angepasst werden.

In einer Ausführungsform der Erfindung enthält die Zusammensetzung daher weitere epoxidgruppenhaltige Verbindungen als Reaktivverdünner, falls erforderlich. Diese Verbindungen enthalten eine oder mehrere Epoxidgruppen. Grundsätzlich kann jede niedrigviskose Verbindung, die mindestens eine Epoxidgruppe pro Molekül trägt, verwendet werden. Es können zwei oder mehrere unterschiedliche Reaktivverdünner kombiniert werden. Geeignete Beispiele sind Allylglycidylether, Butylglycidylether (BGE), 2-Ethylhexylglycidylether, Alkylglycidylether (C₁₂-C₁₄), Tridecylglycidylether, Phenylglycidylether (PGE), o-Kresolglycidylether (CGE), *p*-*tert*-Butylglycidylether, Resorcindiglycidylether (RDGE), 1,4-Butandioldiglycidylether (BDGE), 1,6-Hexandioldiglycidylether (HDGE), Cyclohexandimethanoldiglycidylether, Neopentylglycoldiglycidylether, Trimethylolpropantriglycidylether, Glycerintriglycidylether, Polypropylenglycoldiglycidylether sowie epoxidierte Pflanzenöle wie beispielsweise epoxidiertes Leinöl und epoxidiertes Rizinusöl.

In einer weiteren Ausführungsform der Erfindung enthält die Zusammensetzung statt oder neben einer weiteren epoxidgruppenhaltigen Verbindung als Reaktivverdünner eine weitere Verbindung mit mindestens einer Kohlenstoffmehrfachbindung, welche eine geringe Viskosität aufweist als ggf. weiteren Reaktivverdünner. Geeignete Reaktivverdünner sind Verbindungen mit Kohlenstoffmehrfachbindungen, die jedoch monomer oder oligomer, bevorzugt monomer sind, und können die hierin genannten entsprechenden Gerüste aufweisen.

Erfindungsgemäß enthält die Zusammensetzung mindestens ein ablativ wirkendes Brandschutzadditiv, wobei als Additiv sowohl einzelne Verbindungen als auch ein Gemisch von mehreren Verbindungen verwendet werden kann.

Die Wirkungsweise der erfindungsgemäßen ablativ wirkenden Zusammensetzung baut auf einer endothermen physikalischen und/oder chemischen Reaktion auf, wobei Stoffe, die bei deren Zersetzung große Mengen von Energie benötigen, in der Zusammensetzung enthalten sind. Wird die ausgehärtete Zusammensetzung erhöhter Temperatur, wie etwa im Brandfall der eines Feuers ausgesetzt, wird eine Reihe von chemischen und physikalischen Prozessen in Gang gesetzt. Diese Prozesse sind etwa die Freisetzung von Wasserdampf, Veränderung der chemischen Zusammensetzung und die Bildung nichtbrennbarer Gase, die den zur Verbrennung notwendigen Sauerstoff von der Kabeloberfläche fernhalten. All diese Prozesse benötigen eine große Menge Energie, die dem Feuer entzogen wird. Nachdem die Umwandlung aller organischen Bestandteile abgeschlossen ist, hat sich eine stabile Isolationsschicht aus anorganischen Bestandteilen gebildet, die eine zusätzliche isolierende Wirkung hat.

Zweckmäßig werden als ablativ wirkende Brandschutzadditive (d) solche Materialien eingesetzt, die durch Wasserabspaltung, das etwa in Form von Kristallwasser eingelagert ist, und Wasserverdampfung energieverzehrende Schichten bilden. Die Wärmeenergie, die zur Abspaltung des Wassers aufgewendet werden muss, wird dabei dem Brand entzogen. Ferner werden solche Materialien eingesetzt, die sich bei Hitzeeinwirkung in einer endothermen Reaktion chemisch verändern bzw. zersetzen, verdampfen, sublimieren oder schmelzen. Dadurch werden die beschichteten Substrate gekühlt. Häufig werden bei der Zersetzung inerte, d.h. nicht brennbare Gase wie etwa Kohlendioxid freigesetzt, welche zusätzlich den Sauerstoff in unmittelbarer Umgebung des beschichteten Substrates verdünnen.

Als gasabspaltende Bestandteile eignen sich Hydroxide, wie Aluminiumhydroxid und Magnesiumhydroxid sowie deren Hydrate, die Wasser abspalten, sowie Carbonate, wie Calciumcarbonat, die Kohlendioxid abspalten. Basische Carbonate können sowohl Wasser als auch CO₂ abspalten. Bevorzugt ist eine Kombination von bei verschiedenen Temperaturen mit der Gasabspaltung beginnenden Bestandteilen. So beginnt die Wasserabspaltung bei Aluminiumhydroxid bereits bei ca. 200°C, wogegen die Wasserabspaltung von Magnesiumhydroxid bei ca. 350°C einsetzt, so dass die Gasabspaltung über einen größeren Temperaturbereich hinweg erfolgt.

Geeignete ablativ wirkende Materialien sind, bei Hitzeeinwirkung wasserabgebende anorganische Hydroxide oder Hydrate, wie solche von Natrium, Kalium, Lithium, Barium, Calcium, Magnesium, Bor, Aluminium, Zink, Nickel, ferner Borsäure und deren teilentwässerte Derivate.

Beispielhaft können folgende Verbindungen genannt werden: LiNO₃·3H₂O, Na₂CO₃H₂O (Thermonatrit), Na₂CO₃·7H₂O, Na₂CO₃·10H₂O (Soda), Na₂Ca(CO₃)₂·2H₂O (Pirssonit), Na₂Ca(CO₃)₂·5H₂O (Gaylussit), Na(HCO₃)Na₂CO₃·2H₂O (Trona), Na₂S₂O₃·5H₂O, Na₂O₃Si·5H₂O, KF·2H₂O, CaBr₂·2H₂O, CaBr₂·6H₂O, CaSO₄·2H₂O (Gips), Ca(SO₄)·½H₂O (Bassanit), Ba(OH)₂·8H₂O, Ni(NO₃)₂·6H₂O, Ni(NO₃)₂·4H₂O, Ni(NO₃)₂·2H₂O, Zn(NO₃)₂·4H₂O, Zn(NO₃)₂·6H₂O, (ZnO)₂(B₂O₃)₂·3H₂O, Mg(NO₃)₂·6H₂O (US 5985013 A), MgSO₄·7H₂O (EP1069172A), Mg(OH)₂, Al(OH)₃, Al(OH)₃·3H₂O, AlOOH (Böhmit), Al₂[SO₄]₃·nH₂O mit n = 14 - 18 (US 4,462,831 B), gegebenenfalls im Gemisch mit AlNH₄(SO₄)₂·12H₂O (US5104917A), KAl(SO₄)₂·12H₂O (EP1069172A), CaO·Al₂O₃·10H₂O (Nesquehonit), MgCO₃·3H₂O (Wermlandit), Ca₂Mg₁₄(Al,Fe)₄CO₃(OH)₄₂·29H₂O (Thaumasit), Ca₃Si(OHMSO₄)(CO₃)·12H₂O (Artinit), Mg₂(OH)₂CO₃·H₂O (Ettringit), 3CaO·Al₂O₃·3CaSO₄·32H₂O (Hydromagnesit), Mg₅(OH)₂(CO₃)₄·H₂O (Hydrocalumit), Ca₄Al₂(OH)₁₄·6H₂O (Hydrotalkit), Mg₆Al₂(OH)₁₆CO₃·4H₂O Alumohydrocalcit, CaAl₂(OH)₄(CO₃)₂·3H₂O Scarbroit, Al₁₄(CO₃)₃(OH)₃₆ Hydrogranat, 3CaO·Al₂O₃·6H₂O Dawsonit, NaAl(OH)CO₃, wasserhaltige Zeolithe, Vermikulite, Colemanit, Perlite, Glimmer, Alkalisilikate, Borax, modifizierte Kohlen und Graphite, Kieselsäuren.

In einer bevorzugten Ausführungsform sind die hydrierten Salze ausgewählt aus der Gruppe bestehend aus Al₂(SO₄)·16-18H₂O, NH₄Fe(SO₄)₂·12H₂O, Na₂B₄O₇·10H₂O, NaAl(SO₄)₂·12H₂O, AlNH₄(SO₄)₂·12-24H₂O, Na₂SO₄·10H₂O, M_{g}SO₄·7H₂O, (NH₄)₂SO₄·12H₂O; KAl(SO₄)₂·12H₂O, Na₂SiO₃·9H₂O, Mg(NO₂)₂·6H₂O, Na₂CO₃·7H₂O und Gemischen davon (EP1069172A).

Besonders bevorzugt sind Aluminiumhydroxid, Aluminiumhydroxidhydrate, Magnesiumhydroxid und Zinkborat, da sie eine Aktivierungstemperatur unterhalb 180°C haben.

Optional können der erfindungsgemäßen Zusammensetzung ein oder mehrere reaktive Flammhemmer zugesetzt werden. Derartige Verbindungen werden in das Bindemittel eingebaut. Ein Beispiel im Sinne der Erfindung sind reaktive Organophosphorverbindungen, wie 9,10-Dihydro-9-oxa-10-phosphaphenanthren-10-oxid (DOPO) und dessen Derivate, wie beispielsweise DOPO-HQ, DOPO-NQ, und Addukte. Solche Verbindungen sind beispielsweise beschrieben in S. V Levchik, E. D Weil, Polym. Int. 2004, 53, 1901-1929.

Das ablativ wirkende Brandschutzadditiv kann in einer Menge von 5 bis 99 Gew.-% in der Zusammensetzung enthalten sein, wobei die Menge im Wesentlichen von der Applikationsform der Zusammensetzung (Sprühen, Pinseln und dergleichen) abhängt. Um eine möglichst gute Isolation zu bewirken, wird der Anteil des ablativ wirkenden Brandschutzadditivs in der Gesamtformulierung so hoch wie möglich eingestellt. Bevorzugt beträgt der Anteil des ablativ wirkenden Brandschutzadditives in der Gesamtformulierung 5 bis 85 Gew.-% und besonders bevorzugt 40 bis 80 Gew.-%.

Die Zusammensetzung kann neben den ablativ wirkenden Additiven gegebenenfalls übliche Hilfsmittel, wie Lösungsmittel, etwa Xylol oder Toluol, Netzmittel, etwa auf Basis von Polyacrylaten und/oder Polyphosphaten, Entschäumer, wie Silikonentschäumer, Verdicker, wie Alginatverdicker, Farbstoffe, Fungizide, Weichmacher, wie chlorhaltige Wachse, Bindemittel, Flammhemmer oder diverse Füllstoffe, wie Vermiculit, anorganische Fasern, Quarzsand, Mikroglaskugeln, Glimmer, Siliziumdioxid, Mineralwolle, und dergleichen enthalten.

Zusätzliche Additive wie Verdicker, Rheologieadditive und Füllstoffe können der Zusammensetzung zugegeben werden. Als Rheologieadditive, wie Anti-Absetzmittel, Antiablaufmittel und Thixotropiermittel, werden vorzugsweise Polyhydroxycarbonsäureamide, Harnstoffderivate, Salze ungesättigter Carbonsäureester, Alkylammoniumsalze saurer Phosphorsäurederivate, Ketoxime, Aminsalze der p-Toluolsulfonsäure, Aminsalze von Sulfonsäurederivaten sowie wässrige oder organische Lösungen oder Mischungen der Verbindungen verwendet werden verwendet. Daneben können Rheologieadditive auf Basis pyrogener oder gefällter Kieselsäuren oder auf Basis silanisierter pyrogener oder gefällter Kieselsäuren eingesetzt werden. Bevorzugt handelt es sich bei dem Rheologieadditiv um pyrogene Kieselsäuren, modifizierte und nicht modifizierte Schichtsilikate, Fällungskieselsäuren, Celluloseether, Polysaccharide, PU-und Acrylatverdicker, Harnstoffderivate, Rizinusölderivate, Polyamide und Fettsäureamide und Polyolefine, soweit sie in fester Form vorliegen, pulverisierte Cellulosen und/oder Suspensionsmittel wie z.B. Xanthan-Gummi.

Die erfindungsgemäße Zusammensetzung kann als Zwei- oder mehrkomponenten-System konfektioniert werden.

Wenn die mindestens eine Verbindung (a) und die mindestens eine Verbindung (b) ohne die Verwendung eines Katalysators bei Raumtemperatur nicht mit der mindestens einen Thiol-Verbindung (c) reagieren, können diese zusammen gelagert werden. Falls eine Reaktion bei Raumtemperatur eintritt, müssen die mindestens eine Verbindung (a) und die mindestens eine Verbindung (b) reaktionsinhibierend getrennt von der mindestens einen Thiol-Verbindung (c) angeordnet werden. In Anwesenheit eines Katalysators muss dieser getrennt von den Verbindungen (a) und (b) gelagert werden. Hierdurch wird erreicht, dass die beiden Verbindungen (a) und (b) und die mindestens eine Thiol-Verbindung (c) erst unmittelbar vor der Anwendung miteinander gemischt werden und die Härtungsreaktion auslösen. Dies macht das System einfacher in der Handhabung.

In einer bevorzugten Ausführungsform der Erfindung ist die erfindungsgemäße Zusammensetzung als Zweikomponenten-System konfektioniert, wobei die mindestens eine Verbindung (a) und die mindestens eine Verbindung (b) reaktionsinhibierend getrennt von der mindestens einen Thiol-Verbindung (c) angeordnet und damit reaktionsinhibierend auf zwei Komponenten aufgeteilt sind. Dementsprechend enthält eine erste Komponente, die Komponente I, die Verbindungen (a) und (b) und eine zweite Komponente, die Komponente II, die mindestens eine Thiol-Verbindung (c).

Das mindestens eine Epoxidharz (a) ist dabei bevorzugt in einer in einer Menge von 15 bis 95 Gew.-% in der Komponente I enthalten.

Wird ein Reaktivverdünner verwendet, so ist dieser in einer Menge von 90 bis 1 Gew.-%, bevorzugt 70 bis 1 Gew.-%, weiter bevorzugt 50 bis 1 Gew.-% und stärker bevorzugt 40 bis 1 Gew.-% in der Komponente I enthalten.

Die Thiol-Verbindung (c) ist bevorzugt in einer Menge von 0,5 bis 90 Gew.-%, besonders bevorzugt in einer Menge von 2 bis 85 Gew.-% in der Komponente II enthalten.

Die multifunktionelle Verbindung (b), die mindestens zwei elektronenarme Kohlenstoffmehrfachbindungen pro Molekül als funktionelle Gruppen aufweist, ist bevorzugt in einer Menge von 2 bis 50 Gew.-%, besonders bevorzugt in einer Menge von 2 bis 20 Gew.-% in der Komponente I enthalten.

Das ablativ wirkende Brandschutzadditiv (d) kann dabei als Gesamtmischung oder in Einzelkomponenten aufgeteilt in einer Komponente oder mehreren Komponenten enthalten sein. Dessen Aufteilung erfolgt abhängig von der Verträglichkeit der in der Zusammensetzung enthaltenen Verbindungen, so dass weder eine Reaktion der in der Zusammensetzung enthaltenen Verbindungen miteinander bzw. eine gegenseitige Störung erfolgen kann. Dies ist von den verwendeten Verbindungen abhängig. Hierdurch wird sichergestellt, dass ein möglichst hoher Anteil an Füllstoffen erzielt werden kann. Dies führt zu einer guten Kühlung, selbst bei geringen Schichtdicken der Zusammensetzung.

Die Zusammensetzung wird als Paste mit einem Pinsel, einer Rolle oder durch Sprühen auf das Substrat aufgebracht. Dass Substrat kann dabei metallisch sein oder aus einem anderen, nicht metallischen Material bestehen, wie etwa Kunststoff im Fall von Kabeln oder aus Mineralwolle im Fall von Weichschotts, oder aus einer Materialkombination, etwa aus metallischen und nicht metallischen Materialien, wie im Fall von Kabeltrassen. Bevorzugt wird die Zusammensetzung mittels eines Airless-Sprühverfahrens aufgebracht.

Die erfindungsgemäße Zusammensetzung zeichnet sich, verglichen mit den lösemittel-und wasserbasierten Systemen, durch eine relativ schnelle Aushärtung durch eine Additionsreaktion und damit nicht notwendige physikalische Trocknung aus. Dies ist insbesondere dann sehr wichtig, wenn die beschichteten Bauteile schnell belastet bzw. weiterverarbeitet werden müssen, sei es durch Beschichtung mit einer Deckschicht oder ein Bewegen oder Transportieren der Bauteile. Auch ist die Beschichtung somit deutlich weniger anfällig gegenüber äußeren Einflüssen auf der Baustelle, wie z.B. Beaufschlagung mit (Regen)-wasser oder Staub und Schmutz, was in lösemittel- oder wasserbasierten Systemen zu einem Auswaschen von wasserlöslichen Bestandteilen führen kann, bzw. bei der Aufnahme von Staub zu einer reduzierten ablativen Wirkung. Durch die geringe Viskosität der Zusammensetzung trotz des hohen Feststoffanteils, der ohne die Zugabe leicht flüchtiger Lösemittel bis zu 99 Gew.-% in der Zusammensetzung betragen kann, bleibt die Zusammensetzung einfach zu verarbeiten, insbesondere durch gängige Sprühverfahren.

Deshalb ist die erfindungsgemäße Zusammensetzung insbesondere als Brandschutzbeschichtung, insbesondere sprühbare Beschichtung für Bauteile auf metallischer und nicht metallischer Basis geeignet. Die erfindungsgemäße Zusammensetzung findet vor allem im Baubereich als Beschichtung, insbesondere Brandschutzbeschichtung für einzelne Kabel, Kabelbündel, Kabeltrassen und Kabelkanäle oder andere Leitungen Verwendung sowie als Brandschutzbeschichtung für Stahlkonstruktionselemente, aber auch für Konstruktionselemente aus anderen Materialien, wie Beton oder Holz.

Ein weiterer Gegenstand der Erfindung ist daher die Verwendung der erfindungsgemäßen Zusammensetzung als Beschichtung, insbesondere als Beschichtung für Konstruktionselemente oder Bauelemente aus Stahl, Beton, Holz und anderen Materialien, wie etwa Kunststoffen, insbesondere als Brandschutzbeschichtung für einzelne Kabel, Kabelbündel, Kabeltrassen und Kabelkanäle oder andere Leitungen oder Weichschotts.

Die vorliegende Erfindung betrifft auch Objekte, die erhalten werden, wenn die erfindungsgemäße Zusammensetzung ausgehärtet ist. Die Objekte haben ausgezeichnete ablative Eigenschaften.

Die folgenden Beispiele dienen der weiteren Erläuterung der Erfindung.

### AUSFÜHRUNGSBEISPIELE

Für die Herstellung von erfindungsgemäßen ablativ wirkenden Zusammensetzungen verwendet man die nachfolgend aufgelisteten Bestandteile. Es werden jeweils die Bestandteile mit Hilfe eines Dissolvers vermengt und homogenisiert. Für die Anwendung werden diese Mischungen dann entweder vor dem Versprühen oder während des Versprühens vermischt und appliziert.

Zur Bestimmung der Brandschutzeigenschaften wurde die ausgehärtete Zusammensetzung einer Prüfung nach EN ISO 11925-2 unterzogen. Die Prüfung erfolgt in einem zugfrei aufgestellten Entzündlichkeitsprüfgerät von FTT (Fire Testing Technology). Bei der Prüfung wird im Winkel von 45° eine Kleinbrennerflamme für 30 s auf die Probenoberfläche gerichtet, dies entspricht einer Flächenbeflammung.

Es werden jeweils Proben mit den Abmessungen 9 cm x 25 cm und einer Anwendungsdicke von 1 mm verwendet. Diese Proben härteten bei Raumtemperatur aus und wurden drei Tage bei 40°C gealtert.

Das Vergleichsbeispiel wurde drei Wochen bei 40°C gelagert.

Nach der Alterung erfolgt die Überprüfung der Höhe der angegriffenen Fläche, wobei überprüft wird, ob die Flamme 150 mm Höhe erreicht hat.

Die Aushärtungszeit und der Aushärtungsverlauf wurden bestimmt. Dabei wurde mit einem Spatel getestet, wann der Gelpunkt erreicht war.

Für die folgenden Beispiele 1 und 2 wurde als Bestandteil D Aluminiumtrihydrat (HN 434 der J.M. Huber Corporation, Finnland) verwendet, wobei jeweils 18 g davon verwendet wurden.

### Vergleichsbeispiel 1

Als Vergleich diente ein kommerzielles Brandschutzprodukt (CP 679 A; Hilti AG).

### Vergleichsbeispiel 2

| **Bestandteil** | **Menge [g]** |
|---|---|
| Bisphenol A/F Epoxidharz¹⁾ | 38,8 |
| 1,1,1-Tris(hydroxymethyl)propantriacrylat ²⁾ | 7,3 |
| Diethylentriamin ³⁾ | 3,1 |
| Polyetheramin ⁴⁾ | 10,8 |
| Calciumcarbonat, gemahlen ⁵⁾ | 72,0 |

| | |
|---|---|
| ¹⁾ Epilox AF 18-30; LEUNA-Harze GmbH ²⁾ Alfa Aesar ³⁾ Merck ⁴⁾ Jeffamine T 403, Huntsman ⁵⁾ Durcal 5, N.Z.M. GRIT NV (BE) | |

### Beispiel 1

| **Bestandteil** | **Menge [g]** |
|---|---|
| Bisphenol A/F Epoxidharz ⁶⁾ | 28,3 |
| 1,1,1-Tris(hydroxymethyl)propantriacrylat ⁷⁾ | 5,3 |
| Glykoldi(3-mercaptopropionat) ⁸⁾ | 12,8 |
| Pentaerythritoltetra(3-mercaptopropionat) ⁹⁾ | 13,2 |
| 2,4,6-Tris(dimethylaminomethyl)phenol, Bis[(dimethylamino)methyl]phenol ¹⁰⁾ | 0,5 |
| Calciumcarbonat, gemahlen ¹¹⁾ | 72,0 |

| | |
|---|---|
| ⁶⁾ Epilox AF 18-30; LEUNA-Harze GmbH ⁷⁾ Alfa Aesar ⁸⁾ Thiocure GDMP; BRUNO BOCK Chemische Fabrik GmbH & Co KG ⁹⁾ Thiocure PETMP; BRUNO BOCK Chemische Fabrik GmbH & Co KG ¹⁰⁾ Ancamine K54; Huntsman Corp. ¹¹⁾ Durcal 5; N.Z.M. GRIT NV (BE) | |

### Beispiel 2

| **Bestandteil** | **Menge [g]** |
|---|---|
| Bisphenol A/F Epoxidharz ⁶⁾ | 32,2 |
| 1,1,1-Tris(hydroxymethyl)propantriacrylat ⁷⁾ | 6,1 |
| Magnesiumhydroxid ¹²⁾ | 12,6 |
| Glykoldi(3-mercaptopropionat) ⁸⁾ | 14,6 |
| Pentaerythritoltetra(3-mercaptopropionat) ⁹⁾ | 15,0 |
| 2,4,6-Tris(dimethylaminomethyl)phenol, Bis[(dimethylamino)methyl]phenol ¹⁰⁾ | 0,5 |
| Calciumcarbonat, gemahlen ¹¹⁾ | 72,1 |

| | |
|---|---|
| ⁶⁾ Epilox AF 18-30; LEUNA-Harze GmbH ⁷⁾ Alfa Aesar ⁸⁾ Thiocure GDMP; BRUNO BOCK Chemische Fabrik GmbH & Co KG ⁹⁾ Thiocure PETMP; BRUNO BOCK Chemische Fabrik GmbH & Co KG ¹⁰⁾ Ancamine K54; Huntsman Corp. ¹¹⁾ Durcal 51; N.Z.M. GRIT NV (BE) ¹²⁾ Merck | |

### Beispiel 3

| **Bestandteil** | **Menge [g]** |
|---|---|
| Bisphenol A/F Epoxidharz ⁶⁾ | 32,2 |
| 1,1,1-Tris(hydroxymethyl)propantriacrylat ⁷⁾ | 6,1 |
| Ammoniumpolyphosphat ¹³⁾ | 12,6 |
| Glykoldi(3-mercaptopropionat) ⁸⁾ | 14,6 |
| Pentaerythritoltetra(3-mercaptopropionat) ⁹⁾ | 15,0 |
| 2,4,6-Tris(dimethylaminomethyl)phenol, Bis[(dimethylamino)methyl]phenol ¹⁰⁾ | 0,5 |
| Calciumcarbonat, gemahlen ¹¹⁾ | 72,0 |

| | |
|---|---|
| ⁶⁾ Epilox AF 18-30; LEUNA-Harze GmbH ⁷⁾ Alfa Aesar ⁸⁾ Thiocure GDMP; BRUNO BOCK Chemische Fabrik GmbH & Co KG ⁹⁾ Thiocure PETMP; BRUNO BOCK Chemische Fabrik GmbH & Co KG ¹⁰⁾ Ancamine K54; Huntsman Corp. ¹¹⁾ Durcal 51; N.Z.M. GRIT NV (BE) ¹³⁾ Exolit AP 755; Clariant International Ltd (CH) | |

### Beispiel 4

| **Bestandteil** | **Menge [g]** |
|---|---|
| Bisphenol A/F Epoxidharz ⁶⁾ | 32,2 |
| 1,1,1-Tris(hydroxymethyl)propantriacrylat ⁷⁾ | 6,1 |
| organisches Phosphinat ¹⁴⁾ | 12,6 |
| Glykoldi(3-mercaptopropionat) ⁸⁾ | 14,6 |
| Pentaerythritoltetra(3-mercaptopropionat ⁹⁾ | 15,0 |
| 2,4,6-Tris(dimethylaminomethyl)phenol, Bis[(dimethylamino)methyl]phenol ¹⁰⁾ | 0,5 |
| Calciumcarbonat, gemahlen ¹¹⁾ | 72,1 |

| | |
|---|---|
| ⁶⁾ Epilox AF 18-30; LEUNA-Harze GmbH ⁷⁾ Alfa Aesar ⁸⁾ Thiocure GDMP; BRUNO BOCK Chemische Fabrik GmbH & Co KG ⁹⁾ Thiocure PETMP; BRUNO BOCK Chemische Fabrik GmbH & Co KG ¹⁰⁾ Ancamine K54; Huntsman Corp. ¹¹⁾ Durcal 51; N.Z.M. GRIT NV (BE) ¹³⁾ Exolit AP 755; Clariant International Ltd (CH) ¹⁴⁾ Exolit OP 935; Clariant International Ltd (CH) | |

**Tabelle 1: Ergebnisse der Bestimmung der Aushärtungszeit, der Flammenhöhe und der Entzündung**

| **Beispiele** | **Vergleich 1** | **Vergleich 2** | **1** | **2** | **3** | **4** |
|---|---|---|---|---|---|---|
| Aushärtungszeit in min | 3 Wochen | 64 | 20,5 | 19,5 | 27 | 32,5 |
| Hat die Flamme Höhe von 150 mm erreicht | Nein | Nein | Nein | Nein | Nein | Nein |
| Entzündung | Nein | Nein | Nein | Nein | Nein | Nein |

## Patentansprüche

1. Brandschutz-Zusammensetzung mit
mindestens einer Verbindung (a), die mindestens zwei Epoxidguppen als funktionelle Gruppen (FG-a) aufweist,
mindestens einer Verbindung (b), die mindestens zwei Gruppen mit elektronenarmen Kohlenstoffmehrfachbindungen pro Molekül als funktionelle Gruppen (FG-b) aufweist,
mindestens einer Thiol-Verbindung (c), die mindestens zwei Thiol-Gruppen als funktionelle Gruppen (FG-c) aufweist, und
mindestens einem ablativ wirkenden Brandschutzadditiv (d).

2. Zusammensetzung nach Anspruch 1, wobei das mindestens eine multifunktionelle Epoxidharz (a) durch die Reaktion von Polyhydroxyverbindungen mit Epihalogenhydrinen oder deren Vorläufern erhältlich ist und eine Epoxidäquivalentmasse (EEW) ≤ 550 g/Val aufweist.

3. Zusammensetzung nach Anspruch 2, wobei die Polyhydroxyverbindung unter mehrwertigen Phenolen ausgewählt ist.

4. Zusammensetzung nach Anspruch 3, wobei die Polyhydroxyverbindung Bisphenol A oder Bisphenol F oder ein Gemisch davon ist.

5. Zusammensetzung nach einem der vorhergehenden Ansprüche, wobei die funktionellen Gruppen (FG-b) der Verbindung (b) die Struktur (I) oder (II) aufweisen: 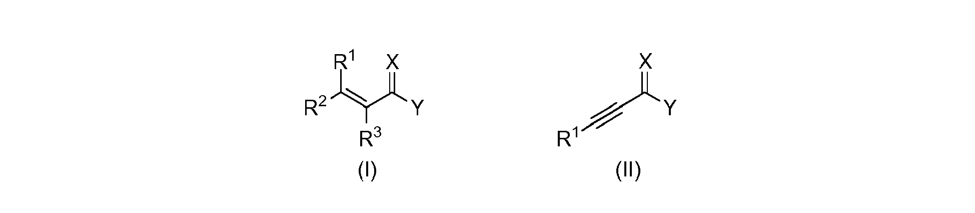 in denen
R¹, R² und R³ jeweils unabhängig voneinander Wasserstoff, eine lineare, verzweigte oder cyclische, gegebenenfalls substituierte Alkylgruppe, Arylgruppe, Aralkylgruppe oder Alkylarylgruppe darstellen, wobei diese unabhängig voneinander zusätzliche Ethergruppen, Carboxylgruppen, Carbonylgruppen, Thiol-analoge Gruppen, Stickstoff enthaltende Gruppen oder Kombinationen davon enthalten können; X O, S oder NR⁴ darstellt, worin R⁴ Wasserstoff oder jede der organischen Gruppen, wie sie für R¹, R² und R³ beschrieben sind, darstellt; Y OR⁵, SR⁵ oder NR⁵R⁶ darstellt, worin R⁵ und R⁶ Wasserstoff oder jede der organischen Gruppen, wie sie oben für R¹, R² und R³ beschrieben sind, darstellen.

6. Zusammensetzung nach einem der vorhergehenden Ansprüche, wobei die Verbindung (c) unter Estern der α-Thioessigsäure (2-Mercaptoacetate), β-Thiopropionsäure (3-Mercaptopropionate) und 3-Thiobuttersäure (3-Mercaptobutyrate) mit Monoalkoholen, Diolen, Triolen, Tetraolen, Pentaolen oder anderen Polyolen oder Gemischen davon sowie unter 2-Hydroxy-3-mercaptopropylderivaten von Monoalkoholen, Diolen, Triolen, Tetraolen, Pentaolen oder anderen Polyolen oder Gemischen davon ausgewählt ist.

7. Zusammensetzung nach einem der vorhergehenden Ansprüche, wobei die Zusammensetzung ferner als Co-Härtungsmittel mindestens eine Verbindung (e), die mindestens zwei Aminogruppen als funktionelle Gruppen (FG-e) aufweist, enthält.

8. Zusammensetzung nach Anspruch 7, wobei das mindestens eine Amin unter primären und/oder sekundären aliphatischen Aminen und/oder Polyaminen ausgewählt ist.

9. Zusammensetzung nach einem der vorhergehenden Ansprüche, wobei die Zusammensetzung ferner einen Katalysator (K-1) für die Reaktion der Verbindung (a) mit der Verbindung (c) und/oder einen Katalysator (K-2) für die Reaktion der Verbindung (b) mit der Verbindung (c) enthält.

10. Zusammensetzung nach Anspruch 9, wobei der Katalysator (K-1) ein Phenol-Derivat oder ein tertiäres Amin ist.

11. Zusammensetzung nach einem der vorhergehenden Ansprüche, wobei das wenigstens eine ablativ wirkende Brandschutzadditiv aus der Gruppe ausgewählt ist, bestehend aus LiNO₃·3H₂O, Na2CO3H2O (Thermonatrit), Na₂CO₃·7H₂O, Na₂CO₃·10H₂O (Soda), Na₂Ca(CO₃)₂·2H₂O (Pirssonit), Na₂Ca(CO₃)₂·5H₂O (Gaylussit), Na(HCO₃)Na₂CO₃·2H₂O (Trona), Na₂S₂O₃·5H₂O, Na₂O₃Si·5H₂O, KF·2H₂O, CaBr₂·2H₂O, CaBr₂·6H₂O, CaSO₄·2H₂O (Gips), Ca(SO₄)·½H₂O (Bassanit), Ba(OH)₂·8H₂O, Ni(NO₃)₂·6H₂O, Ni(NO₃)₂·4H₂O, Ni(NO₃)₂·2H₂O, Zn(NO₃)₂·4H₂O, Zn(NO₃)₂·6H₂O, (ZnO)₂(B₂O₃)₂·3H₂O, Mg(NO₃)₂·6H₂O (US 5985013 A), MgSO₄·7H₂O (EP1069172A), Mg(OH)₂, Al(OH)₃, Al(OH)₃·3H₂O, AlOOH (Böhmit), Al₂[SO₄]₃·nH₂O mit n = 14 - 18 (US 4,462,831 B), gegebenenfalls im Gemisch mit AlNH₄(SO₄)₂·12H₂O (US5104917A), KAl(SO₄)₂·12H₂O (EP1069172A), CaO·Al₂O₃·10H₂O (Nesquehonit), MgCO₃·3H₂O (Wermlandit), Ca₂Mg₁₄(Al,Fe)₄CO₃(OH)₄₂·29H₂O (Thaumasit), Ca₃Si(OH)₆(SO₄)(CO₃)·12H₂O (Artinit), Mg₂(OH)₂CO₃·H₂O (Ettringit), 3CaO·Al₂O₃·3CaSO₄·32H₂O (Hydromagnesit), Mg₅(OH)(CO₃)₄·4H₂O (Hydrocalumit), Ca₄Al₂(OH)₁₄·6H₂O (Hydrotalkit), Mg₆Al₂(OH)₁₆CO₃·4H₂O Alumohydrocalcit, CaAl₂(OH)₄(CO₃)₂·3H₂O Scarbroit, Al₁₄(CO₃)₃(OH)₃₆ Hydrogranat, 3CaO·Al₂O₃·6H₂O Dawsonit, NaAl(OH)CO₃, wasserhaltige Zeolithe, Vermikulite, Colemanit, Perlite, Glimmer, Alkalisilikate, Borax, modifizierten Kohlen, Graphiten, Kieselsäuren und Gemischen davon.

12. Zusammensetzung nach einem der vorhergehenden Ansprüche, wobei die Zusammensetzung ferner organische und/oder anorganische Zuschlagstoffe und/oder weitere Additive enthält.

13. Verwendung der Zusammensetzung nach einem der Ansprüche 1 bis 12 als Beschichtung.

14. Verwendung nach Anspruch 13 für die Beschichtung von Konstruktionselementen.

15. Verwendung nach Anspruch 13 für die Beschichtung von nicht metallischen Bauteilen.

16. Verwendung nach einem der Ansprüche 13 bis 15 als als Brandschutzschicht, insbesondere für einzelne Kabel, Kabelbündel, Kabeltrassen und Kabelkanäle oder andere Leitungen oder Weichschotts.

17. Gehärtete Objekte, erhalten durch Härten der Zusammensetzung nach einem der Ansprüche 1 bis 12.
